# EUROPEAN PATENT APPLICATION

(11) **EP 1 640 480 A1**
(43) Date of publication of application: **29.03.2006**
(21) Application number: 04736984.8
(22) Date of filing: 17.06.2004
(51) Int. Cl.: C25D 21/16, B01J 19/08

(54) **METHOD FOR THE RECOVERY OF GOLD AND/OR SILVER FROM A CYANIDE COMPLEXES SOLUTION OF GOLD AND/OR SILVER**

(30) Priority: 17.06.2003 ES 200301414
(71) Applicant: Universidad Rey Juan Carlos, 28933 Mostoles (Madrid) (ES)
(72) Inventor: AGUADO ALONSO, José, Despacho 140 Edif. Depart. I, 28933 Mostoles (ES); VAN GRIEKEN SALVADOR, R., Desp. 128 Ed. Dept. I, 28933 Mostoles (ES); LOPEZ MUNOZ, Maria J., Despacho 228 Edif. Dept. I, 28933 Mostoles (ES); MARUGAN AGUADO, Angel J., Desp. 104 Edif. Dept. I, 28933 Mostoles (ES)
(74) Representative: Carvajal y Urquijo, Isabel
(86) International application number: PCT/ES2004/000283
(87) International publication number: WO 2004/111313

(57) **Abstract**

The invention relates to a method for the recovery of gold and/or silver from a cyanide complexes solution of gold and/or silver, particularly from spent electrolytic baths. The inventive method comprises the following steps consisting in removing the oxygen from the solution, irradiating same with an ultraviolet radiation source which is visible in the presence of a photocatalyst, and separating the solid containing the photocatalyst, gold and/or silver from the liquid.

## Description

### State of the art

The photocatalytic reduction of metals from aqueous solutions is well documented in the literature. Usually the requirements for this process are the total absence of oxygen in the solution and the presence of oxidizable compounds. There are some patents describing photocatalytic processes that allow the reduction of gold salts by using ZnFe₂O₄ as catalyst in the presence of methanol (CN1073984) and a large variety of semiconducting materials in the presence of oxidizable compounds and oxygen (US4559237). The feasibility of these processes is supported by the large reduction potentials of silver and gold salts in solution, which are even higher than that corresponding to oxygen.

However, up to date there are no references neither in patents nor in the scientific literature of the photocatalytic treatment of spent plating baths or the photocatalytic reduction of Ag(CN)₂⁻ and Au(CN)₂⁻ complexes. The latter are the main species found in silver and gold plating solutions, together with a large amount of organic additives and chelating agents. The reduction potentials of these complexes are well below zero, making the reduction of the metals very difficult. Serpone *et al.* (J. Photochem., vol. 36, 373-388, 1987) showed that the photocatalytic reduction of gold in the presence of cyanide requires the addition of an oxidizing agent to remove the cyanides, thus avoiding the formation of gold-cyanide complexes, very stable species in the experimental conditions used by these authors.

Nowadays, gold and silver recovery is mainly carried out by electrolysis, a process which consumes a large amount of energy for dilute solutions, or by the use of ion exchange resins with very low selectivity. In both cases, the solids are usually treated by a company specialized in precious metals recovery, whereas the liquid effluent with a high cyanide content is decontaminated by chemical oxidation, mainly by alkaline chlorination.

Therefore, there is a need for an alternative procedure economically feasible for gold and silver recovery from dilute solutions,of cyanide complexes, such the one here presented.

### Summary of the invention

The present invention has shown that it is possible the photocatalytic recovery of metals from silver and gold cyanide complexes solutions. Contrarily to the prior art described above, the presented process achieves the degradation of the metal-cyanide complexes producing the deposition of the metals.

### Description of the invention

The aim of the present invention is the photocatalytic recovery of gold and silver from solutions of metal cyanide complexes, essentially present as Au(CN)₂⁻ y Ag(CN)₂⁻ respectively. This is the case of spent plating bath solutions, which usually show also high concentrations of cyanide and organic compounds, and traces of some other heavy metals.

The procedure comprises the following stages:
a) removal of oxygen from the solution;
b) irradiation in the presence of a photocatalyst with ultraviolet-visible radiation in the wavelength range between 250 y 450 nm. This could be accomplished by an electrical lamp or by the fraction of the solar spectrum in this range.
c) separation of the solids that contain the photocatalyst, gold and/or silver, from the liquid by sedimentation, centrifugation, filtration, etc..

The use of TiO₂/SiO₂ photocatalysts allows the separation by sedimentation, whereas for powder TiO₂ filtration or centrifugation is required due to the large sedimentation time.

The time required for the total recovery of the gold or silver content from the spent plating bath depends on the initial concentration of the metal, and the power and emission spectrum of the radiation source used.

Concerning stage a), the value of the reduction potentials of gold and silver cyanocomplexes are well below zero. Therefore, to accomplish the silver or gold reduction, oxygen must be removed from the solution; this can be done by bubbling an inert gas.

Following a preferred embodiment of the invention, the photocatalyst is selected from TiO₂ or TiO₂ supported on SiO₂. TiO₂ supported on SiO₂ presents the additional advantage of making easier the separation of the solids after the reaction. Preferably, the TiO₂ supported on SiO₂ photocatalyst contains a weight percentage of TiO₂ between 5 and 80%.

Preferably, the radiation source used in the irradiation stage is a medium pressure mercury lamp.

Following a preferred embodiment of the invention, prior to stage a), the pH of the solution is adjusted to a value higher than 9.2, the pKₐ corresponding to HCN acid, by addition, if required, of a base.

Likewise, following a preferred embodiment of the invention, in case that the organic content of the solution were lower than 300 mg/l of total organic carbon, organic matter is added. Such organic matter would be, preferably, isopropanol or ethanol until reaching a concentration higher than a volumetric percentage of 0.1%.

The solids recovered in stage c), that contain the photocatalyst and gold, the photocatalyst and silver, or the photocatalyst, gold and silver, depending on the gold and silver content in the solution, can be treated for the selective separation of the metal by chemical attack.

First, the solid can be contacted with a nitric acid solution; in this way silver would be selectively dissolved. Alternatively, the solid can be treated by addition of *aqua regia;* in this way gold would be selectively dissolved. This alternative is recommended when the solution contains only gold, and therefore, the solid contains only the photocatalyst and gold. In the case of silver-containing solids, the nitric acid content of *aqua regia* would also dissolve the silver. Consequently, when the solids obtained in stage c) present both metals, it is recommended a first treatment with nitric acid to selectively dissolve the silver content, and a subsequent attack with *aqua regia* to selectively dissolve the gold content. The separation of the metal content allows the reuse of the catalyst.

Following a different alternative, and depending on the catalyst relative cost, the solid can be treated by addition of hydrofluoric acid. In that way, the photocatalyst would be dissolved and the solids obtained would be essentially metallic gold and/or metallic silver.

Coupling of this procedure with any technology for the cyanide treatment and for the gold and silver purification is also possible. The solids can be sent at low cost to a company specialized in the recovery of precious metals, due to their reduce volume and toxicity.

Concerning the liquid effluent of the stage c), its high cyanide content requires a cyanide removal stage prior to conventional wastewater treatment. The cyanide removal can be done by any of the available technologies. Preferably, cyanide can be oxidized through photocatalytic oxidation with oxygen.

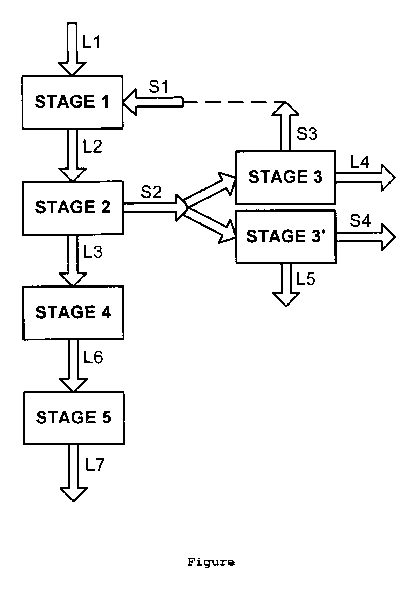

### Description of the figure

In order to improve the comprehension of the process, a simplified flow diagram of this invention is included. In this figure, L1 represents the spent plating solution, which is considered suitable to the photocatalytic treatment (Stage 1) that produces the reduction of the metal when illuminating the suspension of the S1 catalyst;

L2 represents the suspension obtained after the photoreduction of gold or silver complexes that is sent to the separation process, producing a liquid L3 free of solids and a solid S2 consisting of a mixture of the catalyst with the deposited metal.

Stage 3 represents the chemical attack of the solid S2 with *aqua regia* or nitric acid to recover selectively gold or silver respectively in L4 liquid. The remaining solid, S3, can be reused as S1 catalyst.

Stage 3' represents an alternative stage of chemical attack of the S2 solid with hydrofluoric acid that produces the catalyst dissolution. The remaining solid, S4, is essentially formed by metallic gold or silver.

Stage 4 represents a cyanide removal treatment that reduces the toxicity of the L3 liquid. The obtained liquid L6 can be sent to a conventional wastewater treatment plant (stage 5) prior to its final discharge.

### Examples

The invention is illustrated by the following examples, non-limiting its application.

### Example 1:

A spent gold plating bath with the composition summarized in table 1 was treated.

**TABLE 1**

| | Au | Cu | Zn | Ni | Fe | K | Free CN⁻ | TOC |
|---|---|---|---|---|---|---|---|---|
| mg/L | 217 | 8 | 120 | 168 | 92 | 550 | 55 | 6800 |

First, the pH value of a liter of the spent plating bath was fixed to 11, and the dissolved oxygen was removed by bubbling helium through the solution (150 ml/min) for 30 minutes. Afterwards, the photocatalytic treatment was carried out by using 2.5 grams of a silica-supported photocatalyst with 20 wt% of TiO₂ illuminated by a 150W medium pressure mercury lamp. After a 5h delay, the deposition of 97.7% of the gold was achieved in 180 minutes.

After the separation of the solids by sedimentation, a liquid with the composition displayed in table 2 was obtained.

**TABLE 2**

| | Au | Cu | Zn | Ni | Fe | K | Free CN⁻ | TOC |
|---|---|---|---|---|---|---|---|---|
| mg/L | 5 | 8 | 120 | 168 | 92 | 550 | 112 | 6800 |

The selective recovery of gold was achieved, producing a simultaneous increase in the cyanide availability for the subsequent oxidation treatment.

The recovered solids, with an intense violet colour showed 8.2 wt% of gold. The addition of *aqua regia* allowed the selective separation of gold, allowing the reuse of the catalyst.

### Example 2:

A spent silver plating bath previously recovered by an electrolytic process was treated. Its composition is summarized in table 3.

**TABLE 3**

| | Ag | Cu | Zn | Ni | K | Free CN⁻ | TOC |
|---|---|---|---|---|---|---|---|
| mg/L | 50 | 4800 | 290 | 300 | 550 | 2780 | 3950 |

First, the dissolved oxygen of a liter of the spent plating bath was removed by nitrogen bubbling through the solution (150 ml/min) for 30 minutes. It was not necessary pH adjustment because pH value of the bath was close to 11. Afterwards, the photocatalytic treatment was carried out by illuminating a suspension of 0.5 grams of a TiO₂ catalyst in the previous solution with a 150W medium-pressure mercury lamp. After 180 minutes of irradiation, 97% of the silver complexes were reduced.

Solids were recovered by filtration obtaining a liquid with the composition shown in table 4.

**TABLE 4**

| | Ag | Cu | Zn | Ni | K | Free CN⁻ | TOC |
|---|---|---|---|---|---|---|---|
| mg/L | 1.5 | 4800 | 290 | 300 | 550 | 2820 | 3950 |

The silver is selectively recovered, slightly increasing the cyanide availability for the oxidation treatment.

The recovered solids, with a intense grey colour, showed 9.6 wt% of silver. The addition of nitric acid allowed the selective dissolution of the silver, whereas the catalyst can be reused.

## Claims

1. A process for the recovery of gold and/or silver from solutions of cyanide complexes of gold and/or silver, **characterized by** comprising the following stages:
a) removal of oxygen from the solution;
b) irradiation in the presence of a photocatalyst with ultraviolet-visible radiation in the wavelength range between 250 y 450 nm;
c) separation of the solids containing the photocatalyst, gold and/or silver from the liquid by sedimentation, centrifugation or filtration.

2. A process according to claim 1, wherein the solution is a spent plating bath.

3. A process according to claims 1 or 2, wherein the photocatalyst is selected from TiO₂ or TiO₂ supported on SiO₂.

4. A process according to claim 3, wherein the photocatalyst of TiO₂ supported on SiO₂ contains between 5 and 80 weight percent of TiO₂.

5. A process according to any claim from 1 to 4, wherein the stage b) is performed by irradiation with a medium pressure mercury lamp.

6. A process according to any claim from 1 to 5, wherein the stage a) is performed by bubbling an inert gas in the solution.

7. A process according to any claim from 1 to 6, wherein prior to the stage a) the pH of the solution is adjusted to a value higher than 9.2 by addition, if required, of a base.

8. A process according to any claim from 1 to 7, wherein in the case that the concentration of organic matter in the solution was lower than 300 mg/l of total organic carbon, organic matter is added until reaching a volume concentration higher than 0.1%.

9. A process according to claim from 8, wherein the organic matter to be added is selected from isopropanol and ethanol.

10. A process according to any claim from 1 to 9, wherein the solids obtained in stage c) are treated by addition of *aqua regia,* producing the selective dissolution of gold.

11. A process according to any claim from 1 to 10, wherein the solids obtained in stage c) are treated by addition of nitric acid, producing the selective dissolution of silver.

12. A process according to any claim from 1 to 11, wherein the solids obtained in stage c) are treated by addition of hydrofluoric acid, producing the selective dissolution of the photocatalyst.

13. A process according to any claim from 1 to 12, wherein the solids obtained in stage c) are treated first by addition of nitric acid, producing the selective dissolution of silver, and subsequently by addition of *aqua regia* producing the selective dissolution of gold.

14. A process according to any claim from 1 to 13, wherein the cyanides of the liquid obtained in stage c) are oxidized.

15. A process according to claim 14, wherein the cyanides are oxidized by photocatalytic oxidation with oxygen.
